Europäisches Patentamt

(19) European Patent Office

Office européen des brevets

(11) Publication number : **0 416 715 B1**

(12) # EUROPEAN PATENT SPECIFICATION

(45) Date of publication of patent specification :
**02.12.92 Bulletin 92/49**

(51) Int. Cl.⁵ : **F24F 11/053,** G05D 23/185,
**F16K 31/08**

(21) Application number : **90202694.7**

(22) Date of filing : **02.01.87**

(54) **Warm-up arrangement for central air conditioning system.**

(30) Priority : **06.01.86 US 816187**

(43) Date of publication of application :
**13.03.91 Bulletin 91/11**

(45) Publication of the grant of the patent :
**02.12.92 Bulletin 92/49**

(84) Designated Contracting States :
**CH FR GB LI SE**

(56) References cited :
**EP-A- 0 043 002**
**GB-A- 813 260**
**US-A- 3 117 723**
**US-A- 3 450 342**
**US-A- 4 073 433**

(60) Publication number of the earlier application in
accordance with Art. 76 EPC : **0 229 742**

(73) Proprietor : **CARRIER CORPORATION**
**Carrier Tower 6304 Carrier Parkway P.O. Box**
**4800**
**Syracuse New York 13221 (US)**

(72) Inventor : **Dreibelbis, Richard C.**
**55 Sanford Road**
**Fair Lawn, New Jersey 07410 (US)**
Inventor : **Coleman, Milton H.**
**122 West Dauenhauer Street**
**East Syracuse, New York 13057 (US)**

(74) Representative : **Weydert, Robert et al**
**OFFICE DENNEMEYER S.à.r.l. P.O. Box 1502**
**L-1015 Luxembourg (LU)**

EP 0 416 715 B1

## Description

The invention relates to a central air conditioning system. In central air conditioning systems air flow into a zone Is controlled by the degree of bellows inflation which is in turn controlled by a thermostatic bleed valve (EP-A-O 043 002). Where conditioned air is supplied at a single temperature, it is often necessary and/or desirable to change over from heating to cooling and vice versa. Such changeovers can be long-term, as in the case of seasonal changes or short-term, as in the case of warming up an overcooled building prior to the arrival of the work force. For example, after a weekend or holiday during which the minimum cooling condition overcooled the building in the absence of the cooling load supplied by the personnel, lights and equipment, it is desirable to warm the building long enough to reduce the overcooling to an acceptable level. The thermostatic response is, however, correct without change for only one mode of operation. If, for example, the thermostatic response is correct for cooling, the supplying of heated air will encounter a minimum or no flow condition in an undercooled zone or area and dissatisfaction causing overheating if the zone temperature is above the cooling set point. Obviously, neither condition is satisfactory nor energy sufficient.

To avoid that disadvantage it has already been proposed to provide an override means in from of a bimetallic helical element in a pressure reducing or regulator valve to enable uncontrolled warm-up operation. A central air conditioning system according to the precharacterizing portion of independent claim 1 having such override means is disclosed in US-A-4 073 433.

A magnetically operated valve is disclosed in GB-A-813 260. The known valve comprises housing means defining a chamber and having a plurality of fluid port means in fluid communication with said chamber, valve element means including magnetic means and being pivotably mounted in said chamber so as to be movable between a first position blocking one of said port means and a second position blocking another of said port means and actuator means including a magnetic member and means for moving said magnetic member relative to said magnetic means whereby said valve element means is caused to move between said first and second positions due to magnetic force between said magnetic means and said magnetic member.

The object of the invention is to provide an improved central air-conditioning system to enable uncontrolled warm-up function allowing warm air flow into a zone when the response of the thermostatic means in the cooling mode is to block warm conditioned air flow to the zone.

According to the invention, to achieve this, there is provided a central air conditioning system comprising means for supplying conditioned air to a zone; means for controlling the flow of said conditioned air into the zone, bleed-type thermostatic means for sensing the temperature in the zone and regulating said means for controlling the flow responsive to the temperature in the zone so as to maintain a preset temperature when cool conditioned air is being supplied by controlling said means for controlling the flow of said conditioned air, and means for overriding said thermostatic means to permit uncontrolled supplying of warm conditioned air for warm-up into said zone, characterized in that said means for overriding includes a valve having housing means defining a chamber and having an unvalved inlet fluidly connected to said bleed-type thermostat so as to provide a fluid bypass to said thermostat which is disabled thereby and an atmospheric outlet in fluid communication with said chamber, valve element means including ferro-magnetic means pivotably mounted in said chamber so as to be movable between a first position blocking said outlet and a second position opening said outlet, biasing means for providing a bias normally positioning said valve element means in said first position, and actuator means including a magnetic member and means for moving said magnetic member into and out of proximity with said ferromagnetic means whereby said valve element means is caused to move against said bias of said biasing means to said second position due to magnetic attraction between said ferro-magnetic means and said magnetic member when in proximity to cause bypassing of said bleed-type thermostat and returns to said first position when out of proximity.

The valve which may also be referred to as a proximity switch can be either thermostatically responsive or solenoid actuated. For warm-up, a bleed line for deflating the bellows is opened when the valve is opened in response to the supplying of warm air or to the ceasing of the supplying of electrical power to the solenoid as due to the opening of a thermostatic switch.

Thus, there is provided an uncontrolled warm-up function in which a valve bypasses a cooling only, duct powered thermostat bleeding an inflatable bellows in a normally open unit when warm air reaches the sensing element controlling the valve in one embodiment and in response to an electrical signal in another embodiment.

Thermostat bypass or shutoff of a duct powered control can be provided in response to an external electric signal as from a fire switch or interlock.

For a fuller understanding of the air conditioning system, reference should now be made to the following detailed description thereof taken in conjunction with the accompanying drawings, wherein:

Figure 1 is a schematic representation of a central air conditioning system employing the essential features of the present invention for a warm-up function;

Fig. 2 is a pictorial view of a first embodiment of a warm-up valve and actuator;

Figure 3 is a sectional view taken along line 3-3 of Figure 2 showing the valve element in a first, actuated position;

Figure 4 is a sectional view of a second embodiment of the warm-up valve and actuator corresponding to Figure 3 and showing the valve element in a second, unactuated position;

Figure 5 is a sectional view of a third embodiment of the warm-up valve and actuator showing the valve element in the second position but which is the solenoid actuated position;

Figure 6 is a pictorial view of the valve element;

Figure 7 is a top view of the valve element; and

Figure 8 is a sectional view taken along line 8-8 of Figure 7.

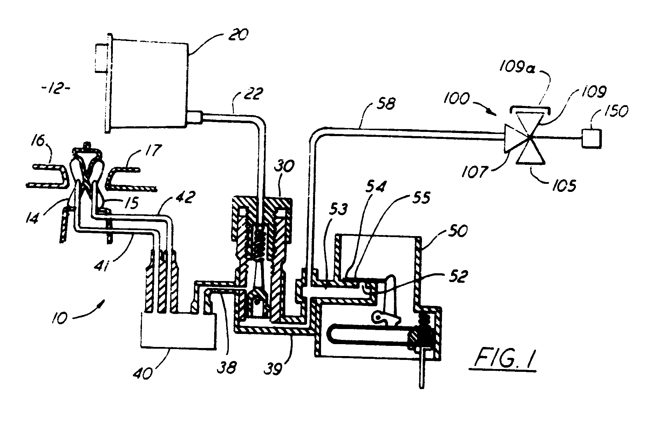

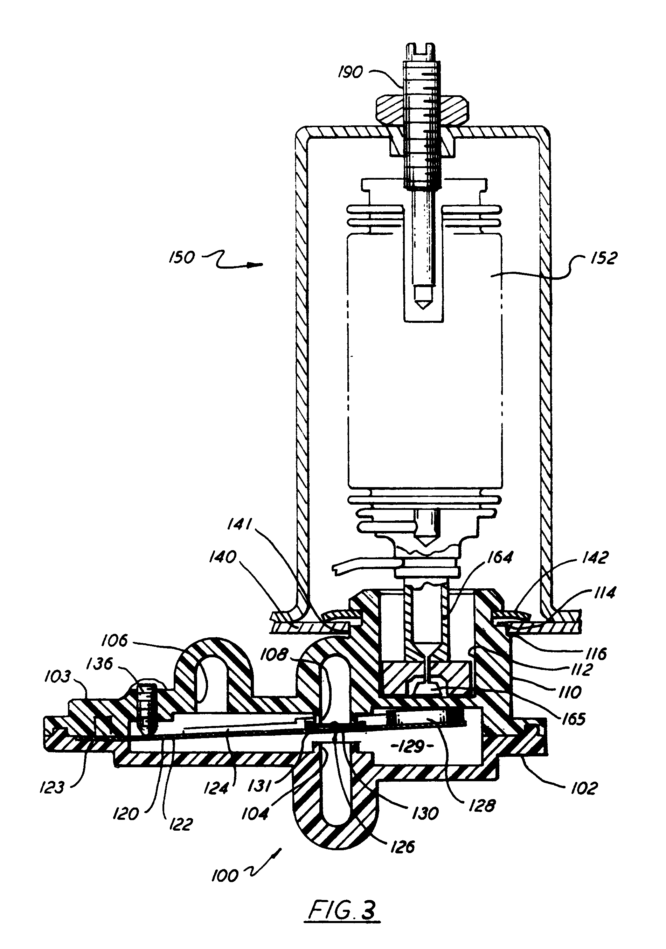

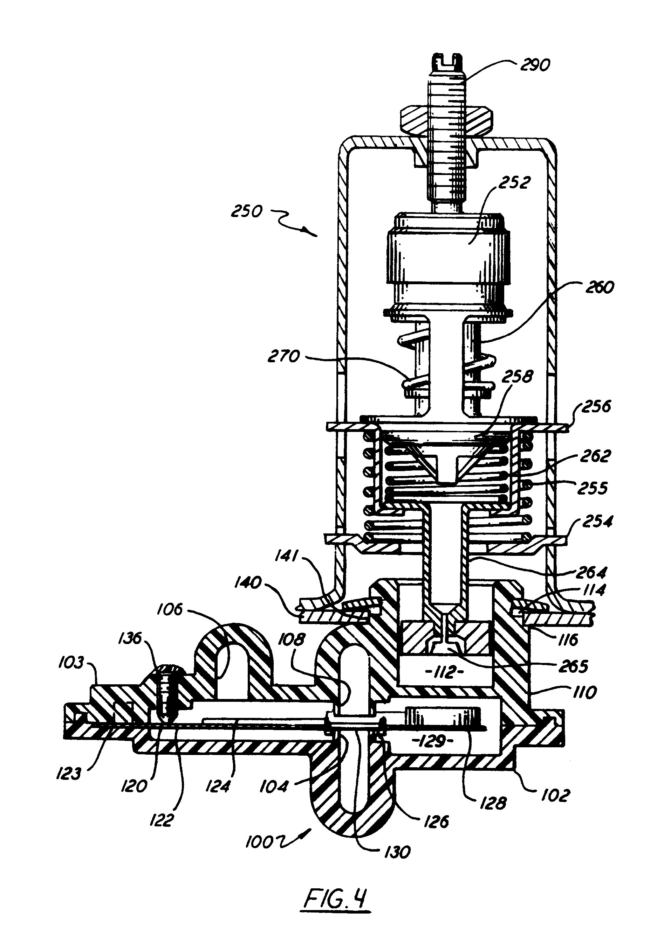

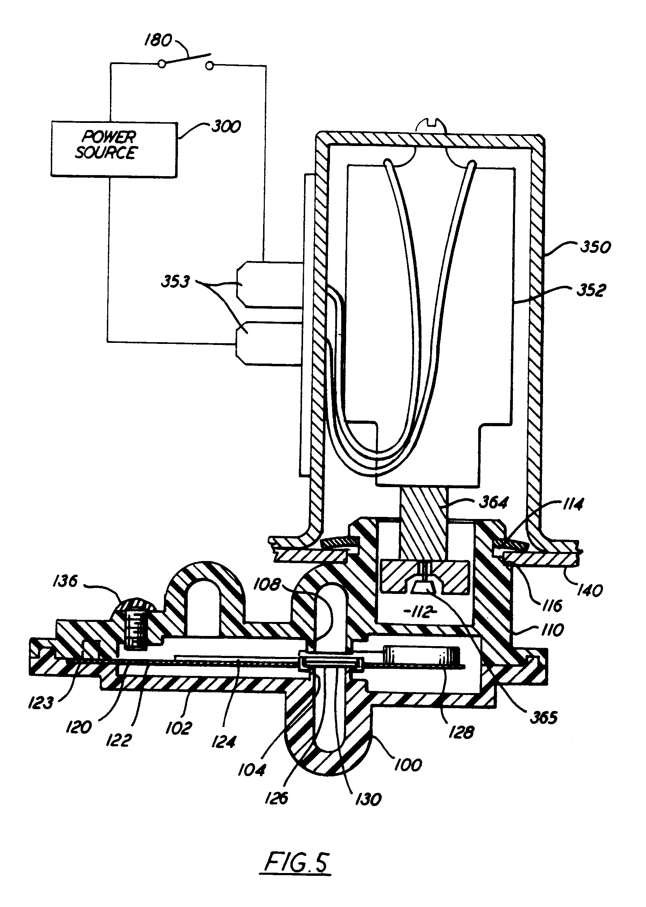

Figure 1 illustrates a central air conditioning unit having the essential features of the invention. The unit has a warm-up valve 100 suitable for use with either actuator 150 of Fig. 3, 250 of Fig. 4 or 350 of Fig. 5 which will be described in more detail hereinafter. The numeral 10 generally designates an air distribution unit in which conditioned air is delivered from a central source thereof (not illustrated) to a plenum chamber 12 of the air distributed unit. A damper arrangement illustrated as inflatable bellows 14 and 15 regulates the flow of conditioned air from the plenum 12 to the area or space being conditioned. A portion of the conditioned air furnished to plenum chamber 12 flows through filter 20 where any foreign bodies entrained therein will be removed. The conditioned air passing through filter 20 is used for controlling the operation of unit 10. The control air passes from filter 20 to pressure regulator 30 via line 22. The control air passes from regulator 30 into distributor 40 via line 38 and from distributor 40 via lines 41 and 42 to bellows 14 and 15, respectively. Additionally, control air passes via line 39 to bleed-type thermostat 50 which senses the temperature of the area to be conditioned and in response thereto controls the magnitude of the control signal supplied to bellows 14 and 15 by bleeding control air through bleed port 52 and the aperture 55 of apertured sliding plate 54. The common or inlet port 107 of valve assembly 100 is connected upstream of bleed port 52 via line 58. Normally open outlet 109 is capped by a cap 109a so that line 58 is normally blocked and has no influence on thermostat 50. Assuming that thermostat 50 is set for cooling an area, the slide plate 54 and therefore the inflation of bellows 14 and 15 will be adjusted accordingly.

If, as described above, an overcooling situation exists in the area and it is desired to have an uncontrolled warm-up, the mere supplying of warm air would not cause flow of warm air into the area because the response of thermostat 50 to the overcooling is to inflate bellows 14 and 15 to block into the area. Actuator 150, as illustrated, actuator 250 (Fig. 4), or thermostatic switch 180 of actuator 350 (Fig. 5) is exposed to the warm air in the plenum or the flowing air stream which causes the actuation of actuator 150 (actuator 250, or the deactuation of actuator 350) which causes the flexure of blade 122 to the Figure 3 position due to the magnetic attraction between magnetic number 165 and magnetic pad 128. In this position, port 104 is uncovered so that bellows 14 and 15 are connected to atmosphere via lines 41 and 42, distributor 40, line 38, line 39, line 58 and outlet 105 which effectively bypasses/disables thermostat 50 such that bellows 14 and 15 deflate and warm air is delivered to the area independent of thermostat 50.

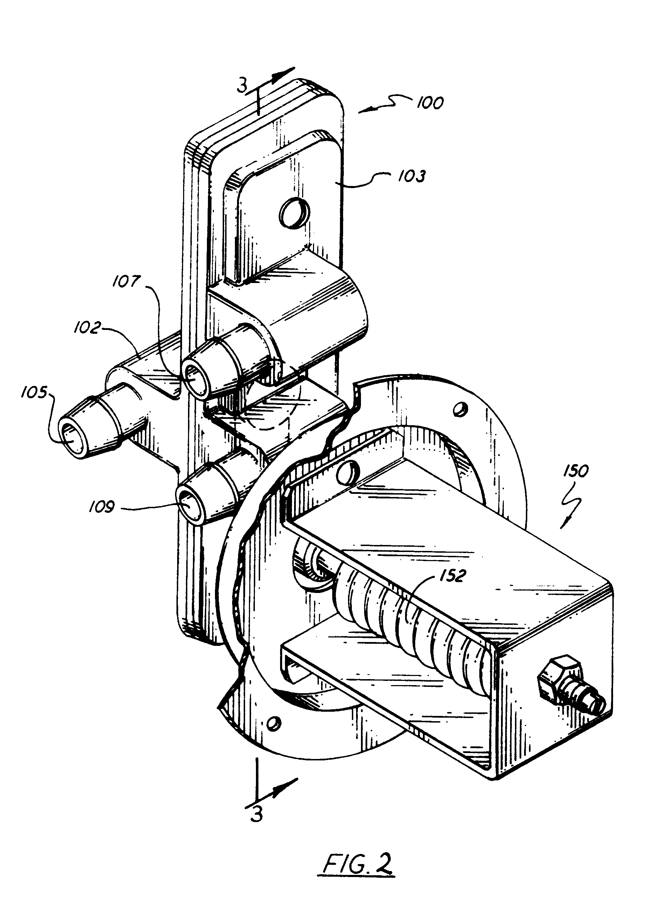

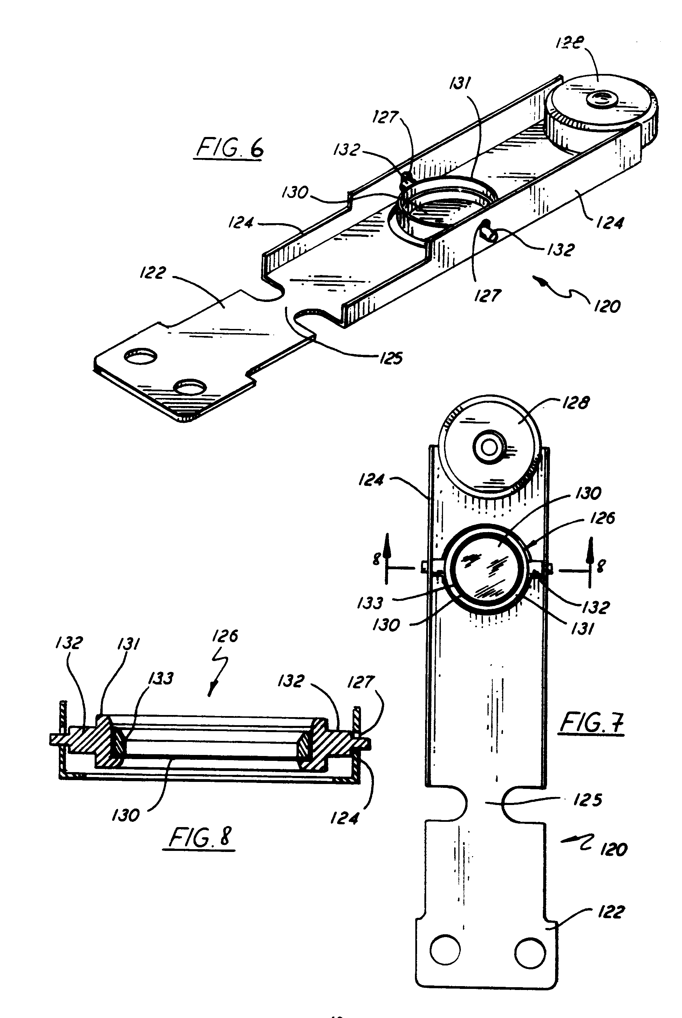

In Figures 2 and 3, the numeral 100 generally designates the valve assembly or proximity switch and the numeral 150 generally designates the actuator. The valve assembly 100 includes mating casing parts 102 and 103 which are of a non-magnetic material, such as plastic, and are glued or otherwise suitably secured together in a fluid tight assembly. Casing part 102 defines a normally closed port 104 which is fluidly connected to outlet 105. Casing part 103 defines port 106 and normally open port 108 which are, respectively, fluidly connected to inlet 107 and outlet 109. Casing part 103 further defines an extension 110 which has a cylindrical chamber 112 formed therein as well as an annular groove 114 and shoulder 116 formed on the exterior of the extension 110. A valve element 120 includes a flexible or pivotable blade 122 having one end received in a complementary recess 123 formed in casing part 102 so as to permit the locating and securing of valve element 120 in the assembling of casing parts 102 and 103. Blade 122 has a stiffener in the form of a stepped turned up flange 124 as well as yoke assembly 126 and low reluctance ferro magnetic pad 128 secured thereto. As is best shown in Figures 6 and 7, blade 122 also has a necked down portion 125 which defines the point of flexure of blade 122. Yoke assembly 126 includes a polyurethane film disc 130 which alternatively seats on port 104 or port 108 in a valving action. Because the yoke assembly 126 moves through an arc in moving between the positions blocking either port 104 or port 108, it is necessary to have the film disc 130 become co-planar with the seating face of ports 104 and 108. To achieve this, yoke 131 is provided with stepped diametrically extending pivot rods 132 as is best shown in Figures 7 and 8. Stepped pivot rods 132 are rotatably or pivotably received in mounting holes 127 in stepped turned up flange 124. Film disc 130 is held in place in yoke 131 by ring 133 which is press fit into yoke 131 with film disc 130 therebetween. Yoke 131 is therefore able to pivot into a co-planar engagement with port 104 or 108 and is moved to the co-planar engagement due to the unbalanced torsional force on the yoke 131 when film disc 130 is not co-planar and engages only one side thereof when engaging port 104 or 108. In installing yoke assembly 126, one or both of the stepped turned up flanges 124 is bent towards flat a sufficient amount to permit yoke assembly 126 to be snapped into mounting holes 127 and the flange(s) returned to their original shape. Screw 136 is threadably secured in casing part 103 and engages blade 122 so as to provide a seating bias to cause film disc 130 to close port 104 as illustrated in Figure 4 in an unactuated position of actuator 150 or 250. The necked down portion 125 of blade 122, as is best shown in Figures 6 and 7, defines the pivot for flexure of blade 122 since it provides the least resistance to flexure.

As best shown in Figure 3, the valve assembly or proximity switch 100 is secured in place by inserting extension 110 into hole 141 in sheet metal member 140 such that shoulder 116 engages sheet metal member 140. Typically, sheet metal member 140 is a member which may be installed in the wall of a plenum. A C-clip 142 or other suitable attachment means is placed in groove 114 and engages the opposite side of sheet metal member 140 as that engaged by shoulder 116.

With valve assembly 100 secured in place in member 140, an actuator can then be attached to member 140. Referring to Figure 3, actuator 150 includes a charged thermostatic bellows 152 which is preferably of copper and filled with gas. Magnetic actuator 164 is secured to bellows 152 and carries a magnetic member 165 which is reciprocated in chamber 112 by the expansion and contraction of bellows 152 due to changes in the temperature of the warm or cool air stream to which it is exposed. Magnetic member 165 acts as a proximity switch with respect to magnetic pad 128 in that magnetic member 165 is not exposed to the fluid within the chamber 129 but causes the movement of film disc 130 in a valving action by attracting magnetic pad 128 when in proximity thereto. In Figures 3 and 4 the structure of the valve assembly or proximity switch 100 is identical but Figure 3 illustrates the position of valve element 120 due to the magnetic attraction between magnetic member 165 and magnetic pad 128 whereas Figure 4 illustrates the unactuated position of valve element 120 due solely to the biasing effect of screw 136. The position of bellows 152 and therefore magnetic member 165 can be adjusted by screw 190.

In Figure 4, the valve assembly 100 is the same as that illustrated in Figures 2 and 3, but actuator 150 has been replaced with a different thermal actuator 250. The thermal actuator 250 is specifically illustrated as a phase change element 252 where a solid phase material goes to a liquid phase in the temperature range of interest and with an increase in volume, but could be a bimetal. In the unactuated position illustrated, compression spring 255 seats against stop 254 and cap member 256. Cap member 256 provides a seat for the head 258 of plunger 260 and is biased in opposition to spring 255 by spring 262 which seats against magnetic actuator 264 and head 258. Magnetic actuator 264 carries a magnetic member 265 which is reciprocated in chamber 112 by the actuator 250. The spring 262 serves as a lost motion device in that it absorbs overtravel of head 258 after magnetic actuator 264 has bottomed out in its movement within chamber 112. Spring 270 serves to return plunger 260 to the illustrated position when the output force is reduce in thermal element 252. The thermal element 252, located in the warm or cool air stream, senses the flowing air temperature and acts by changing phase, when appropriate. The position of thermal element 252 and therefore magnetic member 265 can be adjusted by screw 290.

Referring now to Figure 5, the valve assembly or proximity switch 100 is the same as that of Figures 2-4 but actuator 350 includes an internal spring solenoid 352 for positioning valve element 120 in response to an electric signal. The magnetic actuator 364 which carries magnetic member 365 is attached to the shaft of the solenoid. Upon energizing of the solenoid 352, magnetic member 365 is moved outwardly in chamber 112 causing outlet port 104 to close, as illustrated. When the power is removed from the solenoid 352 the internal spring (not illustrated) causes the magnetic actuator 364 to move magnetic member 365 further into chamber 112 to thereby attract magnetic pad 128 causing valve disc 130 to engage and close port 108 and to open port 104. Power to solenoid 352 through contacts 353 is provided upon the closing of switch 180 which can be a thermostatically responsive switch or a computer controlled switch. The power source 300 can be any suitable source of power and may be incorporated into a computer control.

As noted, the valve assembly 100 is identical in Figures 2-5 Figures 4 and 5 show valve element 120 in the same position closing port 104. However, Figure 4 is a cold or an unactuated position of actuator 250 and Figure 5 is an actuated position of actuator 350. The difference in designation is due to the fact that energy in the form of heat is necessary to expand/actuate the actuators 150 and 250 whereas electrical energy is necessary to contact/actuate actuator 350. Figure 3 shows the valve element 120 in its actuated position closing port 108. In the case of actuator 350, the solenoid 352 is actuated in response to the completing of an electric circuit by the closing of a switch 180 which may be caused by a computer or the like or may be a thermally actuated switch exposed to the conditioned air which completes the power supply circuit upon closing. Actuators 150 and 250, however, are responsive to the temperature of their surroundings and would normally be exposed to the plenum air or the moving air stream.

Additionally, where valve assembly 100 is connected as shown in Figure 1 and powered by actuator 350, an electric signal actuating actuator 350 will open port 105 to cause the bypassing of thermostat 50 and the deflating of bellows 14 and 15 providing maximum air circulation which is desired on the building floors above and below a fire. On the fire floor itself port 105 remains closed and the raised space temperature will cause the bellows 14 and 15 to inflate due to the stopping of bleed flow from thermostat 50 and thereby stop the flow of air to the space.

**Claims**

1. Central air conditioning system comprising means for supplying conditioned air to a zone; means (30) for controlling the flow of said conditioned air into the zone, bleed-type thermostatic means (50) for sensing the temperature in the zone and regulating said means for controlling the flow responsive to the temperature in the zone so as to maintain a preset temperature when cool conditioned air is being supplied by controlling said means (30) for controlling the flow of said conditioned air, and means for overriding said thermostatic means (50) to permit uncontrolled supplying of warm conditioned air for warm-up into said zone, characterized in that said means for overriding includes a valve (100) having housing means (102, 103) defining a chamber (129) and having an unvalved inlet (106, 107) fluidly connected to said bleed-type thermostat (50) so as to provide a fluid bypass to said thermostat (50) which is disabled thereby and an atmospheric outlet (104, 105) in fluid communication with said chamber (129), valve element means (120) including ferro-magnetic means (128) pivotably mounted in said chamber (129) so as to be movable between a first position blocking said outlet (104, 105) and a second position opening said outlet (104, 105), biasing means (136) for providing a bias normally positioning said valve element means (120) in said first position, and actuator means (150; 250; 350) including a magnetic member (165; 265; 365) and means for moving said magnetic member (165; 265; 365) into and out of proximity with said ferro-magnetic means (128) whereby said valve element means (120) is caused to move against said bias of said biasing means (136) to said second position due to magnetic attraction between said ferro-magnetic means (128) and said magnetic member (165; 265; 365) when in proximity to cause bypassing of said bleed-type thermostat (50) and returns to said first position when out of proximity.

2. Air conditioning system according to claim 1, characterized in that said actuator means (150;250;350) includes thermostatically responsive means (152;252;180).

3. Air conditioning system according to claim 1, characterized in that said actuator means (350) includes a solenoid (352).

4. Air conditioning system according to claim 1, characterized in that said actuator means (350) further includes a thermostatically responsive switch (180).

5. Air conditioning system according to claim 1, characterized in that said valve element means (120) further includes defining means (125) for locating a flexure point on said valve element means (120) whereby pivoting of said valve element means (120) occurs by flexure of said flexure point.

6. Air conditioning system according to claim 1, characterized in that said valve element means (120) further includes a valve blade (122) with a valve disc (126) pivotably mounted thereon so as to be coplanar with said outlet (104, 105) when seated thereon.

**Patentansprüche**

1. Zentrale Klimaanlage mit einer Einrichtung zur Zufuhr von klimatisierter Luft zu einer Zone; einer Einrichtung (30) zum Steuern der Strömung der klimatisierten Luft in die Zone, einer Abzapf-Thermostateinrichtung (50) zum Erfassen der Temperatur in der Zone und zum Regulieren der Einrichtung zum Steuern der Strömung aufgrund der Temperatur in der Zone, so daß eine voreingestellte Temperatur aufrechterhalten wird, wenn kalte klimatisierte Luft zugeführt wird, durch Steuern der Einrichtung (30) zum Steuern der Strömung der klimatisierten Luft, und einer Einrichtung zum übersteuern der Thermostateinrichtung (50), um eine ungesteuerte Zufuhr von warmer klimatisierter Luft zum Aufwärmen zu der Zone zu gestatten, dadurch gekennzeichnet, daß die übersteuerungseinrichtung ein Ventil (100) aufweist, das eine Gehäuseeinrichtung (102, 103) hat, welches eine Kammer (129) begrenzt und einen ventillosen Einlaß (106, 107) in Fluidverbindung mit dem Abzapfthermostat (50) hat, um einen Fluidbypass zu dem Thermostat (50) zu schaffen, der dadurch gesperrt wird, und einen atmosphärischen Auslaß (104, 105) in Fluidverbindung mit der Kammer (129), eine Verschlußstückeinrichtung (120) mit einer ferromagnetischen Einrichtung (128), die in der Kammer (129) schwenkbar befestigt ist, so daß sie zwischen einer ersten Position, in der sie den Auslaß (104, 105) blockiert, und einer zweiten Position, in der sie den Auslaß (104, 105) öffnet, bewegbar ist, eine Vorspanneinrichtung (136) zum Erzeugen einer Vorspannung, welche die Verschlußstückeinrichtung (120) normalerweise in der ersten Position positioniert, und eine Stellantriebsrichtung (150; 250; 350) mit einem magnetischen Teil (165; 265; 365) und einer Einrichtung zum Bewegen des magnetischen Teils (165; 265; 365) in die und aus der Nähe der ferromagnetischen Einrichtung (128), wodurch die Verschlußstückeinrichtung (120) veranlaßt wird, sich gegen die Vorspannung der Vorspanneinrichtung (136) aufgrund von magnetischer Anziehung zwischen der ferromagnetischen Einrichtung (128) und dem magnetischen Teil (165; 265; 365), wenn es in der Nähe ist, in die zweite Position zu bewegen, um das Umgehen des Abzapfthermostats (50) zu bewirken, und in die erste Position zurückzukehren, wenn es nicht in der Nähe ist.

2.  Klimaanlage nach Anspruch 1, dadurch gekennzeichnet, daß die Stellantriebseinrichtung (150; 250; 350) eine thermostatisch ansprechende Einrichtung (152; 252; 180) aufweist.

3.  Klimaanlage nach Anspruch 1, dadurch gekennzeichnet, daß die Stellantriebseinrichtung (350) eine Magnetspule (352) aufweist.

4.  Klimaanlage nach Anspruch 1, dadurch gekennzeichnet, daß die Stellantriebseinrichtung (350) weiter einen thermostatisch ansprechenden Schalter (180) aufweist.

5.  Klimaanlage nach Anspruch 1, dadurch gekennzeichnet, daß die Verschlußstückeinrichtung (120) weiter eine Festlegungseinrichtung (125) aufweist zum Festlegen eines Biegepunktes an der Verschlußstückeinrichtung (120), wodurch das Schwenken der Verschlußstückeinrichtung (120) durch Biegung des Biegepunktes auftritt.

6.  Klimaanlage nach Anspruch 1, dadurch gekennzeichnet, daß die Verschlußstückeinrichtung (120) weiter ein Ventilblatt (122) mit einer Ventilscheibe (126) aufweist, die schwenkbar darauf befestigt ist, so daß sie mit dem Auslaß (104, 105) koplanar ist, wenn sie darauf sitzt.

## Revendications

1.  Système de conditionnement d'air central comprenant des moyens pour fournir de l'air conditionné à une zone, à un moyen (30) pour commander le flux d'air conditionné vers et dans la zone, un moyen thermostatique (50) du type à soutirage pour détecter la température dans la zone et pour régler le moyen de commande du flux d'air en fonction de la température dans la zone, afin de maintenir une température prédéterminée lorsque de l'air conditionné froid est en train d'être fourni par la commande du moyen (30) commandant le flux d'air conditionné, et un moyen pour prendre le pas sur le moyen thermostatique (50), afin de permettre une alimentation non contrôlée d'air conditionné chaud, pour produire un échauffement dans ladite zone, caractérisé en ce que le moyen prenant le pas sur le moyen thermostatique comporte une vanne (100) comportant un corps (102,103) définissant une chambre (129) et ayant un orifice d'entrée (106,107) non commandé par un clapet, communiquant avec le thermostat (50) du type à soutirage, afin d'établir une dérivation du fluide par rapport au thermostat (50) qui est alors mis hors service, et un orifice de sortie dans l'atmosphère (104,105) communiquant avec la chambre (129), un clapet (120), comportant un moyen ferromagnétique (128), monté à pivotement dans la chambre (129) de manière à pouvoir se déplacer entre une première position dans laquelle il bloque l'orifice de sortie (104,105) et une seconde position dans laquelle il débloque cet orifice de sortie (104,105), un moyen de sollicitation (136) produisant une sollicitation gui assure normalement le maintien du clapet (120) dans sa première position, et un actionneur (150;250;350) comportant un organe magnétique (165;265;365) et un moyen pour déplacer cet organe magnétique (165;265;365) vers une position proche du moyen ferromagnétique (128) et vers une position éloignée de celui-ci, si bien que le clapet (120) est amené à se déplacer, à l'encontre de la sollicitation exercée par le moyen de sollicitation (136), vers sa seconde position, par suite de l'attraction magnétique entre le moyen ferromagnétique (128) et l'organe magnétique (165;265;365), lorsque ceux-ci se trouvent à proximité l'un de l'autre, afin de provoquer une mise en court-circuit du thermostat (50) du type à soutirage, le clapet revenant dans sa première position lorsque le moyen ferromagnétique et l'organe magnétique sont éloignés l'un de l'autre.

2.  Système de conditionnement d'air suivant la revendication 1 caractérisée en ce que l'actionneur (150;250;350) comporte un moyen répondant d'une manière thermostatique (152;252;180).

3.  Système de conditionnement d'air suivant la revendication 1 caractérisée en ce que l'actionneur (350) comporte un solénoïde (352).

4.  Système de conditionnement d'air suivant la revendication 1 caractérisée en ce que l'actionneur (350) comporte en outre un interrupteur (180) à réponse thermostatique.

5. Système de conditionnement d'air suivant la revendication 1 caractérisée en ce que le clapet (120) comporte en outre un moyen de délimitation (125) pour déterminer un point de flexion sur le clapet (120) si bien que le pivotement du clapet (120) s'effectue par suite d'une flexion à l'endroit de ce point de flexion.

6. Système de conditionnement d'air suivant la revendication 1 caractérisée en ce que le clapet (120) comporte en outre une lame (122) sur laquelle est monté à pivotement un disque de clapet (126), de manière que ce disque soit coplanaire avec l'orifice de sortie (104,105), lorsqu'il est appliqué sur cet orifice.

_FIG. 1_

FIG. 2

FIG.3

FIG.4

FIG.5

FIG. 6

FIG. 7

FIG. 8